(19) Europäisches Patentamt
European Patent Office
Office européen des brevets

(11) **EP 4 083 584 B1**

(12) **EUROPEAN PATENT SPECIFICATION**

(45) Date of publication and mention
of the grant of the patent:
**10.07.2024  Bulletin 2024/28**

(21) Application number: **21171120.5**

(22) Date of filing: **29.04.2021**

(51) International Patent Classification (IPC):
**G01G 11/00** *(2006.01)*    **G01G 19/03** *(2006.01)*

(52) Cooperative Patent Classification (CPC):
**G01G 11/006; G01G 19/035**

(54) **METHOD FOR EVALUATING THE PERFORMANCE OF A DYNAMIC WEIGHING INSTRUMENT, WEIGHING SYSTEM AND COMPUTER PROGRAM**

**VERFAHREN ZUR BEWERTUNG DER LEISTUNG EINES DYNAMISCHEN WÄGEINSTRUMENTS, WÄGESYSTEM UND COMPUTERPROGRAMM**

**PROCÉDÉ D'ÉVALUATION DE LA PERFORMANCE D'UN INSTRUMENT DE PESÉE DYNAMIQUE, SYSTÈME DE PESÉE ET PROGRAMME INFORMATIQUE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.11.2022  Bulletin 2022/44**

(73) Proprietor: **Mettler-Toledo Garvens GmbH**
**31180 Giesen (DE)**

(72) Inventor: **Preussner, Jan Axel**
**31139 Hildesheim (DE)**

(74) Representative: **Mettler-Toledo**
**IP Department**
**Im Langacher 44**
**8606 Greifensee (CH)**

(56) References cited:
**WO-A1-2015/179778    US-A1- 2012 285 218**
**US-A1- 2019 391 001**

## Description

## Technical Field

The present invention is related to a method for evaluating the performance of a dynamic weighing instrument and to a weighing system adapted to carry out said method. Furthermore, the invention is related to a computer program for evaluating the performance of a dynamic weighing instrument and to a data carrier having stored thereupon said computer program.

## Background Art

A dynamic weighing instrument generally comprises conveyor means for conveying an object to be weighed from one location to another one and weighing means for weighing the object while being conveyed by said conveyor means. The dynamic weighing instrument may be operable in one of a plurality of operating states. Each operating state may be determined, for example, by the conveying speed of the conveyor means, the measurement time of the weighing means, etc. The result of the weighing operation carried out by the dynamic weighing instrument, in particular its accuracy, may be influenced by various factors, such as the conveying speed of the conveyor means, the running smoothness of the conveyor means which may be influenced for example by the quality or the state of conveyor rollers of the conveying means, performance factors of the weighing means, etc. For example, the weighing means may have an intrinsic uncertainty. Alternatively, a weighing means might be damaged, for example, when too much weight was loaded, so that the result of the weighing operation is no longer reliable.

Due to the above, it may be desirable or even necessary to check the performance of the dynamic weighing instrument at special instances and/or on a regular basis. In general, a user operates the weighing instrument in one particular operating state which is chosen, for example, depending on the object to be weighed, for instance, its size and expected weight. The operating state may be determined, for example, by a certain conveying speed of the conveyor means and a certain measurement time of the weighing means. To determine the performance of the dynamic weighing instrument, several weighing operations in said particular operating state are carried out without any weight or with a preload/bias and then the standard deviation of the weighing values obtained during the weighing operation is calculated. This standard deviation may be interpreted as a running unsteadiness. If the standard deviation is larger than a certain predetermined value, the performance of the weighing instrument must be improved. For example, a service technician must check the dynamic weighing instrument and carry out repair work or replace damaged parts. However, this approach is very simple and may not allow to detect or predict certain problems of a weighing instrument.

To gain more insight into the performance of equipment, for example a weighing instrument, model-based methods have been proposed. CN 107358299 A discloses a predictive maintenance closed-loop method based on failure modes. Historical maintenance data is combined with the current state of the equipment to form a closed-loop system of predictive maintenance.

WO 2014/165382 A1 discloses a model predictive control framework implemented in a programmable logic controller, and US 9,659,254 B2 discloses a method for selecting a predictive model for a prediction problem. WO 2015/179778 A1 is also related to systems and techniques for predictive data analytics.

CN 110298455 A discloses an intelligent early warning method of mechanical equipment failure based on multivariate estimation and prediction. The method requires the construction of a prediction model for the state parameters of the mechanical equipment and the selection of modelling training data. US 2012/285218 A1 discloses a system and a method for validating the proper performance of a checkweigher, wherein the weight of a validation object as determined by the checkweigher is compared to the weight of the validation object as determined by a static scale to determine if the checkweigher is providing accurate weight readings. US 2019/391001 A1 discloses systems and methods for performing weigh-in-motion operations, wherein weight time is optimized to allow for more accurate weight readings and decreased rejections.

While these model-based methods may be powerful, they are more complicated and may fail when the used model is not well-chosen.

In the light of these problems in the prior art, it is the object of the present invention to provide a method and a weighing system to carry out said method, wherein the method is easy to implement and allows to carry out a meaningful performance check for a weighing instrument.

## Summary of the Invention

According to a first aspect of the present invention, this object is attained by a method for evaluating the performance of a dynamic weighing instrument, said dynamic weighing instrument comprising conveyor means for conveying an object to be weighed and weighing means for weighing the object while being conveyed by said conveyor means, said weighing instrument being operable in one of a plurality of operating states, each operating state being determined by parameter values of at least one operating state parameter, said weighing instrument being adapted to output a weighing value as the result of a weighing operation in a given operating state, the method comprising the following steps:

- selecting a plurality of M evaluation states $E_k$, k=1, ... , M, M $\geq$ 2, from the set of operating states

and a number $N_k$ of weighing operations to be carried out in the respective evaluation state $E_k$,

- executing a performance evaluation routine, wherein said routine comprises, for each of the plurality of evaluation states $E_k$, k=1, ... , M, carrying out the following evaluation routine steps:

    o operating the weighing instrument in the evaluation state $E_k$ determined by the corresponding parameter values of the at least one operating state parameter,

    o carrying out $N_k$ weighing operations in said evaluation state $E_k$ thereby obtaining $N_k$ weighing values as the output of the dynamic weighing instrument,

    o using the $N_k$ weighing values as an input to derive a performance value for the evaluation state $E_k$,

    o storing performance data comprising the performance value and meta data comprising data associated with the evaluation state $E_k$ in a data base, said meta data comprising the parameter values of the at least one operating state parameter which determine the operating state $E_k$.

The dynamic weighing instrument comprises conveyor means for conveying an object to be weighed from one location to another one and weighing means for weighing the object while being conveyed by said conveyor means. The weighing means may comprise a load cell. The conveyor means may comprise a belt conveyor running over the weighing means. In this way, the object to be weighed may be conveyed over the weighing means by the belt conveyor. The weighing instrument may be a checkweigher, a scale or a balance, but it is not limited to this. The weighing operation carried out by the weighing instrument is carried out dynamically, i. e. while the object is being conveyed. Thereby, a weighing value may be produced as an output indicating the weight of the object. For example, the weighing means, e. g. its load cell, may be adapted to obtain a plurality of measured weighing signals of the object to be weighed while being conveyed by the conveyor means during a preset measurement time, and a weighing value which is output by the weighing means may be the average of these measured weighing signals. For example, the measurement time may be chosen such that 100 measured weighing signals are obtained during the measurement time, and the mean value, i. e., the average of said 100 measured weighing signals may be the weighing value which is output by said weighing means.

The weighing instrument may comprise a synchronization light barrier. Usually, the object to be weighed is conveyed by the conveyor means and breaks through the synchronization light barrier. This is the start of the weighing operation, and a plurality of measured weighing signals is obtained during the measurement time. For the method according to the first aspect of the present invention, no object may break through the light barrier and the weighing operation may be performed without any weight/object to be weighed or it may be performed with a given preload/bias weight.

The dynamic weighing instrument is operable in one of a plurality of possible operating states. Each operating state is completely determined by parameter values of at least one operating state parameter. The operating state may be completely determined by more than one operating state parameter, for example by two, three, four or more operating state parameters. For example, the dynamic weighing instrument may be operated in a plurality of operating states determined by the conveying speed of the conveyor means. The conveying speed of the conveyor means may be adjustable between a minimum and a maximum speed. One particular speed value, for example half of the maximum speed, may completely determine the operating state of the weighing instrument.

The parameter values of the operating state parameters may be adjustable in a discrete way. For example, the conveyor means may be adapted to convey the object to be weighed with discrete, for example five, different values of the conveying speed. Alternatively, the operating state parameters may be adjustable in a continuous way.

The method further comprises selecting a plurality of evaluation states $E_k$ from the set of possible operating states. For example, an operator carrying out the method may select the plurality of evaluation states $E_k$. Alternatively, the evaluation states may be predetermined. As each operating state, and thereby each evaluation state, is completely determined by the parameter values of the operating state parameters, selecting the evaluation states may be performed by selecting parameter values of the respective operating state parameters.

The information regarding the plurality of evaluation states, e. g. the respective parameter values of the operating state parameters, may be stored on a data carrier. When the method according to the first aspect of the present invention is carried out, said information may be communicated to the weighing instrument.

The plurality of evaluation states $E_k$ may be identical to the set of all possible operating states. Alternatively, the plurality of evaluation states $E_k$ may be a subset of the possible operating states. At least two evaluation states $E_k$ are selected for the method according to the present invention.

Furthermore, according to the method of the present invention, a number $N_k$ of weighing operations to be carried out in the respective evaluation state $E_k$ is selected. $N_k$ may be the same for each evaluation state. Alternatively, different numbers $N_k$ may be selected for the different evaluation states $E_k$. The number $N_k$ may

be larger than 1, for example, $N_k = 30$ for each evaluation state $E_k$.

The method further comprises executing a performance evaluation routine. In said routine, the following evaluation routine steps are carried out for each of the plurality of evaluation states $E_k$, k=1, ... , M, M $\geq$ 2:

The weighing instrument is operated in the evaluation state $E_k$ determined by the corresponding parameter values of the at least one operating state parameter. In said operating state, $N_k$ weighing operations are carried out. Thereby $N_k$ weighing values are obtained as the output of the dynamic weighing instrument.

These $N_k$ weighing values are used as an input to derive a performance value for the evaluation state $E_k$. Then, performance data comprising the performance value and meta data comprising data associated with the evaluation state $E_k$ is stored in a data base. The meta data comprises the parameter value(s) of the operating state parameter(s) which determine(s) the operating state $E_k$.

The performance value may be a value associated with the performance of the dynamic weighing instrument. For example, the magnitude of the performance value may indicate whether the performance of the weighing instrument is sufficient or not. For example, the performance value may indicate whether the weighing instrument allows to obtain a weighing value with a desired accuracy.

In this way, information regarding the performance of the weighing instrument reflected by the performance value is obtained for the plurality of evaluation states $E_k$, i. e., for at least two evaluation states $E_k$. Thus, one may obtain information regarding the performance of the weighing instrument under various conditions as determined by the parameter values of the operating state parameters. In this way, a very good understanding of the performance of the weighing instrument may be obtained. As the evaluation states may be selected, for example, depending on the type of weighing instrument, its operating conditions (for example, location, temperature, etc.) and so on, this method is adaptable to a variety of scenarios.

Since the performance data is obtained for the plurality of evaluation states, one may be able to detect problems of the weighing instrument which might otherwise not be detectable. E. g., when the weighing instrument is always operated in one standard operating state, it may occur that the performance value for said operating state does not indicate any problem. However, performance values for other operating states may indicate a problem, and so a check-up of the weighing instrument may be performed before the standard operating state is also affected by said problem. E. g., a problem with conveyor rollers may start to occur at the beginning at higher values of the conveying speed, but as time passes, it may start to impair the weighing operation at lower values of the conveying speed as well. Thus, the method according to the present invention is very powerful.

In one embodiment of the method according to the present invention, said method may be carried out by using electronic data processing means. For example, the performance value may be derived by using electronic data processing means. Additionally or alternatively, storing the performance data may comprise using electronic data processing means. The data base may be an electronic data base. The method may be a computer-implemented method. For a computer-implemented method, the evaluation states may be selected via a user input. Alternatively, the evaluation states may be predetermined and said selection may be stored in a data base, e. g. stored on a data carrier, accessible by said electronic data processing means.

In one embodiment of the method according to the present invention, a first operating state parameter may be a conveying speed of the conveyor means and/or a second operating state parameter may be a measurement time of the weighing means. The conveying speed of the conveyor means is the speed with which an object to be weighed is conveyed by said conveyor means. For example, the conveyor means may be a belt conveyor. Then, the conveying speed may be equal to the speed of the conveyor belt.

For a dynamic weighing instrument, the weighing means, e. g., its load cell, may be adapted to output measured weighing signals with a certain sampling frequency f during a measurement time t. Then, t • f measured weighing signals may be determined during the measurement time t, and the weighing value which is output by the weighing means may be derived based on these t • f measured weighing signals. For example, the weighing value which is output by the weighing means may be the mean value (i. e. the average) of the t • f measured weighing signals or of a subset thereof. Generally, however, more complex schemes for deriving the weighing value output by the weighing means are used. For example, the measurement time may be 200 ms, and the sampling frequency may be 5/ms. Then, 1,000 measured weighing signals are collected during the measurement time. The larger the measurement time for a given sampling frequency, the more measured weighing signals may be obtained during the measurement time. In case of a dynamic weighing instrument, calculating a weighing value which is based on a plurality of measured weighing signals (e. g., a weighing value which is the mean value of the measured weighing signals) leads to a much more accurate weighing value reflecting the weight of an object than a single measured weighing signal. This is due to the fact that the measured weighing signals may fluctuate with time, e. g. due to a limited running smoothness of the conveyor means or due to a transient response of the weighing means when the object to be weighed is conveyed on and off the weighing means.

In one example, there may be only one operating state parameter. This operating state parameter may be the first operating state parameter, i. e. the conveying speed. Alternatively, the one operating state parameter may be the second operating state parameter, i. e. the measurement time of the weighing means. Alternatively, there may be two or more operating state parameters. Then, one operating state parameter may be the first operating state parameter, i. e. the conveying speed of the conveyor means and another operating state parameter may be the second operating state parameter, i. e. the measurement time of the weighing means. Alternatively, when there are two or more operating state parameters, one operating state parameter may be the first operating state parameter, i. e. the conveying speed of the conveyor means, and the measurement time is not an operating state parameter. Alternatively, when there are two or more operating state parameters, one operating state parameter may be the second operating state parameter, i. e. the measurement time of the weighing means, and the conveying speed of the conveyor means is not an operating state parameter of the weighing instrument.

In one example, the evaluation states $E_k$ may be determined by at least one operating state parameter, wherein one of the operating state parameters is the conveying speed which may take discrete values between a minimum speed $v_{min}$ and a maximum speed $v_{max}$. For example, the evaluation states $E_k$ may be determined by one operating state parameter taking the parameter values 0.2 $v_{max}$, 0.4 $v_{max}$, 0.6 $v_{max}$, 0.8 $v_{max}$, $v_{max}$. For a typical dynamic weighing instrument, the maximum conveying speed $v_{max}$ may be 60 m/min to 160 m/min, preferably 120 m/min to 150 m/min, and for example 80 m/min.

In the case of a belt conveyor, the measurement time may be a function of the length of the conveyor belt. For example, the maximum measurement time may be half the length of the belt of the belt conveyor divided by the conveying speed. Then, one may express the measurement time as a function of a length, e. g. an effective belt length $l_i$, as $t(v_j) = l_i/(2v_j)$.

In one embodiment of the method according to the first aspect of the present invention, each operating state may be determined by parameter values of the first and second operating state parameters, i. e., the conveying speed and the measurement time, and selecting the plurality of evaluation states $E_k$ may comprise selecting an ordered sequence of conveying speeds from the range between a minimum conveying speed to a maximum conveying speed, and for each of the conveying speeds in the sequence, selecting an ordered sequence of measurement times from the range between a minimum measurement time to a maximum measurement time, and wherein executing the performance evaluation routine may comprise iterating one of the conveying speed or the measurement time through said selected sequence of conveying speeds or measurement times in an outer loop and for each iteration step of said outer loop iterating the other one of the conveying speed or the measurement time through said selected sequence of conveying speeds or measurement times in an inner loop and carrying out the evaluation routine steps for the evaluation state determined by the iterated values of conveying speed and measurement time.

The ordered sequence of conveying speeds may be a strictly monotonically increasing sequence. Alternatively, it may be a strictly monotonically decreasing sequence. The ordered sequence of measurement times may be a strictly monotonically increasing sequence. Alternatively, it may be a strictly monotonically decreasing sequence. The minimum/maximum conveying speed and the minimum/maximum measurement time may be given properties of the dynamic weighing instrument.

According to the above embodiment, the conveying speed may be iterated in the outer loop, and the measurement time may be iterated in the inner loop. Alternatively, the measurement time may be iterated in the outer loop and the conveying speed may be iterated in the inner loop.

In one example of this embodiment, the ordered sequence of selected conveying speeds may be a strictly monotonically increasing sequence, i. e., it may be ordered according to $v_1 < ... < v_l$, wherein $v_1$ is the smallest conveying speed and $v$, is the largest conveying speed. The ordered sequence of measurement times corresponding to one of the conveying speeds $v_i$ may be a strictly monotonically decreasing sequence, i. e., it may be ordered according to $t_1(v_i) > ... > t_{Ji}(v_i)$, wherein $t_1(v_i)$ is the largest measurement time for the conveying speed $v_i$ and $t_{Ji}(v_i)$ is the smallest measurement time for the conveying speed $v_i$. Then, at the starting of the performance evaluation routine, the conveyor means is operated with the conveying speed $v_1$. The measurement time is set to the largest measurement time for the conveying speed $v_1$, and the evaluation routines steps are carried out for the evaluation state determined by the conveying speed $v_1$ and the measurement time $t_1(v_1)$. Then, the measurement time is decreased to the second largest measurement time, i. e., to $t_2(v_1)$, and the evaluation routine steps are carried out for the evaluation state determined by the conveying speed $v_1$ and the measurement time $t_2(v_1)$. In this way, the measurement time is iterated in an inner loop to the smallest measurement time $t_{Ji}(v_i)$, and each time, the evaluation routine steps are carried out for the corresponding evaluation state. Once the smallest measurement time $t_{Ji}(v_i)$ is reached, the conveying speed is increased to the next higher conveying speed $v_2$, and the measurement time is set to the largest measurement time $t_1(v_2)$ for the conveying speed $v_2$. Again, the evaluation routine steps are carried out for the corresponding evaluation state and again the measurement time is iterated in an inner loop to the smallest measurement time $t_{J2}(v_2)$, and the evaluation routine steps are carried out for the corresponding evaluations steps. Then, the conveying speed is increased again to the next higher value $v_3$, and so forth. In this way, the method may be carried out in a very efficient way.

Alternatively, the sequence of measurement times corresponding to one of the conveying speeds of the ordered sequence may be a strictly monotonically increasing sequence, i. e. the measurement times may be ordered according to $t_1(v_i) < ... < t_{Ji}(v_i)$, wherein $t_1(v_i)$ is the smallest measurement time and $t_{Ji}(v_i)$ is the largest measurement time. Alternatively, the ordered sequence of conveying speeds may be a strictly monotonically decreasing sequence, i. e. it may be ordered according to $v_1 > ... > v_I$, wherein $v_i$ is the largest conveying speed and $v_I$ is the smallest conveying speed.

In one embodiment of the method according to the present invention, selecting said plurality of evaluation states may comprise selecting evaluation states determined by standardized parameter values. These standardized parameter values may be predetermined and used each time the method is carried out. In this way, a comparison of the performance data obtained from different weighing instruments and/or with different measurement times may be facilitated. The standardized parameter values may be selected, e. g. by a manufacturer.

There may be embodiments of the method according to the present invention, wherein for at least one of the evaluation states $E_k$ deriving the performance value may comprise calculating the standard deviation of the $N_k$ weighing values obtained in said evaluation state $E_k$. The performance value may be the standard deviation. If $W_k^r$ is the n-th weighing value obtained in the evaluation state $E_k$, the standard deviation is defined as

$$\sigma_k = \sqrt{\frac{1}{N_k} \sum_{n=1}^{N_k} (W_k^n - \mu_k)^2}, \text{ where}$$

$\mu_k = \frac{1}{N_k} \sum_{n=1}^{N_k} W_k^n$ is the mean value of the $N_k$ weighing values. Alternatively, the performance value may comprise other statistical measures, for example the mode or the percentile or the variance which is defined as the square of the standard variation, $\sigma^2$. When the performance value is or comprises the standard deviation of the $N_k$ weighing values or a function of said standard deviation, the performance value may be directly linked to the performance or the quality of the weighing instrument. I. e., a large standard deviation may indicate a limited accuracy of the weighing values obtained with the weighing instrument in the corresponding evaluation state.

In one example, the method may further comprise comparing the performance data with benchmark data reflecting performance requirements for said weighing instrument. The benchmark data may comprise data related to quality requirements for the weighing instrument defined, e. g., by the manufacturer and/or the user. The benchmark data may comprise data related to the performance value of a given evaluation state. The benchmark data may be saved on the same data carrier as the data base. The comparison of the performance data with the benchmark data may be via electronic data processing means. For example, in case that the performance value is the standard deviation or a function thereof, said standard deviation or function thereof may be compared to a benchmark value. When the standard deviation or function thereof is larger than said benchmark value, the weighing instrument may be considered as being not reliable.

There may be embodiments of the method according to the present invention, where the performance evaluation routine is carried out more than one time for each of the plurality of evaluation states. In one embodiment of the present invention, the method may comprise executing the performance evaluation routine at a first time $t_1$ and storing meta data related to the first time $t_1$ together with the performance data derived at the first time $t_1$ in the data base, and the method may further comprise executing the performance evaluation routine again at a later, second time $t_2$ and storing meta data related to the second time $t_2$ together with the performance data derived at the second time $t_2$ in the data base. The meta data comprises data related to the parameter values of the operating state parameters, the location of the weighing instrument, the identity (e. g. an ID number) of the weighing instrument, etc. The meta data related to the first and/or second times $t_1$, $t_2$ may be or comprise the first and/or second times $t_1$, $t_2$.

The method may further comprise comparing the performance data stored during the performance evaluation routine executed at the first time $t_1$ and the performance data stored during the performance evaluation routine executed at the second time $t_2$. As the performance data is stored for more than one evaluation state, a wide variety of possible problems of the weighing instrument may be revealable. For example, it may be that the performance data changes only for certain evaluation states. E. g., the performance data may only change for high values of the conveying speed. This may give information regarding possible problems of the weighing instrument.

The performance evaluation routine may be carried out for more than two times. E. g., it may be carried out at a third time which is later than the second time, at a fourth time which is later than the third time, and so forth. Again, for the third, fourth, ..., time, meta data related to the third, fourth, ..., time may be stored together with the performance data derived at the respective third, fourth, ..., time. Then, a comparison of the performance data obtained at the respective times may be carried out.

Such an embodiment of the present invention as mentioned above may be useful in the following scenarios:

In a first scenario, the location where the dynamic weighing instrument is being operated may change. For example, the weighing instrument may be delivered from a manufacturer's site to a customer's site where it is assembled. The change of location may, however, not be free from problems. For example, there might occur damages of the weighing instrument during transport. The weighing instrument may not be assembled correctly at the customer's site, or there might occur some misadjustments. Then, the performance of the weighing instrument may be worse than expected. To overcome this problem, the performance evaluation routine for said weighing instrument may be carried out at a first time $t_1$ at the manufacturer's site. The performance data stored during the performance evaluation routine executed at the first time $t_1$ may be compared, for example, with benchmark data reflecting the performance requirements for said weighing instrument. When it is determined that the weighing instrument fulfils the desired performance requirements, the weighing instrument may be delivered to the customer's site. There, the weighing instrument is assembled and the performance evaluation routine may be executed at the later, second time $t_2$. Then, the performance data stored during the performance evaluation routine executed at the second time $t_2$ may be compared with the performance data stored during the performance evaluation routine executed at the first time $t_1$. In this way, it may be determined whether the weighing instrument fulfils the same performance requirements as it has initially fulfilled at the manufacturer's site. If this is not the case, the assembly or the alignment of the weighing instrument may be checked or a service technician may carry out a thorough inspection of the weighing instrument.

Furthermore, comparing the performance data stored for performance evaluation routines carried out at different times may also be used to monitor the change of the performance of the weighing instrument over time. For example, when it is determined that the performance data stored during the performance evaluation routine executed at a second, later time $t_2$ is different from the performance data stored during the performance evaluation routine executed at a first time $t_1$, one may conclude that the performance of the weighing instrument has changed or deteriorated over time. For example, when the performance value is the standard deviation, an increase of said standard deviation from time $t_1$ to time $t_2$ for certain evaluation states may indicate a problem. This information may further be used to determine when a service check of the weighing instrument should be carried out.

The performance data obtained in this way may thus be used as follows:

- The data may be sent to a system using a data management software, e. g. ProdX of Mettler-Toledo. The data may be stored as performance data in the data base. The software may compare several data sets obtained with performance evaluation routines carried out by the same weighing instrument at different times and indicate changes. This may give an idea whether the performance/quality of the weighing instrument, e. g., its conveyor means, has changed over time.

- The performance data obtained with the method may be sent to a central data base, e. g. at the manufacturer's site. When enough data is collected for different weighing instruments, better statements can be defined about the expectations of weighing instruments of different levels of sophistication. For example, the performance data of the different weighing instruments of similar type may be compared, and a typical accuracy of a weighing instrument may be obtained. Alternatively, the performance data of different types of weighing instruments may be compared, and a prediction about the performance of a weighing instrument may be possible.

- The performance data of the same weighing instrument derived at different times may be sent to a central data base, e. g. at the manufacturer's site. Thus, measurements of the same weighing instrument separated in time may be compared. Then, statements about necessary corrective measures may be possible. E. g., the method may be used for weighing instrument calibration.

- The performance data obtained at different times may remain on the weighing instrument itself. The comparison of said performance data, e. g. via electronic data processing means, may be used for predictive maintenance to indicate to an operator a possible deterioration in the performance/quality of the weighing instrument, for example, in its conveyor means.

Example of the method

In the following, an example of the method according to the present invention is presented. In this example, the operating states of the weighing instrument are completely determined by parameter values of two operating state parameters. For the example, one of the operating state parameters is the conveying speed of the conveyor means, and the other one of the operating state parameters is the measurement time of the weighing means. The conveying speed and the measurement time were defined above.

In a first step of the method, a plurality of evaluation states $E_k$ is selected from the set of possible operating states. To this end, parameter values for the conveying speed and for the measurement time are selected. For example, for the ordered sequence of conveying speeds the parameter values $0.2\ v_{max} < 0.4\ v_{max} < 0.6\ v_{max} < 0.8\ v_{max} < 1.0\ v_{max}$ may be selected, wherein $v_{max}$ is the maximum conveying speed of the conveyor means.

For each of the five conveying speed values of the ordered sequence, an ordered sequence of measurement times may be selected. For example, the same ordered sequence of measurement times may be selected for each of the five conveying speed values. For example, six measurement times in a range between a minimum measurement time and a maximum measurement time of the weighing instrument may be selected. Alternatively, one may define the measurement times of the sequence via the length of a conveying distance. For a belt conveyor, one may, e. g., consider half of the belt length, $l_{max}/2$, as the maximum conveying distance, and then define, for each conveying speed $v_j$ of the ordered sequence, a measurement time according to $t = l_{max}/(2 v_j)$. In this way, a plurality of measurement times may be defined for each conveying speed by defining first a plurality of possible conveying length values, $l_i/2$, which are smaller than half of the belt length, and then calculating, for each conveying speed value $v_j$, a measurement time $t_i(v_j) = l_i/(2 v_j)$. Then, one may order for each conveying speed the respective measurement times in a strictly monotonically decreasing sequence.

The method further comprises selecting, for each evaluation state $E_k$, a number $N_k$ of weighing operations to be carried out in the respective evaluation state $E_k$. The weighing operations may be carried out without any weight or they may be carried out with a given preload/bias weight.

The number $N_k$ may be the same for all evaluation states, and may be chosen e. g. to be $N_k = 30$.

In the next step, the performance evaluation routine is executed. The performance evaluation routine may be executed as follows.

At the start, the conveyor means may be operated with the smallest value of the conveying speed from the ordered sequence, i. e. with $0.2\,v_{max}$. For example, an operating unit may activate the conveyor means to operate with this smallest conveying speed. In the further course of the performance evaluation routine, the conveying speed $v_i$ is iterated through said selected ordered sequence of conveying speeds from the smallest value $0.2\,v_{max}$ to the largest value, i. e. to $0.4\,v_{max}$, $0.6\,v_{max}$, $0.8\,v_{max}$ and $1.0\,v_{max}$ in this order. This may be understood as an "outer loop".

In an "inner loop", the operating unit may for each iteration step of said outer loop, i. e. for each conveying speed $v_i$ iterate the measurement time through the selected sequence of measurement times from the largest value $t_1(v_i)$ for the conveying speed $v_i$ to the smallest value $t_{Ji}(v_i)$ for said conveying speed $v_i$. In this way, the weighing instrument is operated in the different evaluation states determined by the conveying speed $v_i$ and the measurement time $t_j(v_i)$. I. e., for each conveying speed $v_i$, the measurement time is iteratively decreased from $t_1(v_i)$ to the smallest measurement time $t_{Ji}(v_i)$. (Alternatively, for each conveying speed $v_i$ the measurement time may be increased from the smallest measurement time to the largest measurement time).

In an "innermost loop", the operating unit may operate the weighing instrument to carry out $N_k$ measurements in the respective evaluation state to obtain $N_k$ weighing values, i. e. 30 weighing operations in the example. I. e., the conveying speed of the conveyor means is set to $v_i$ and the weighing means performs a weighing operation using the measurement time $t_j(v_i)$ and outputs the $N_k$ weighing values as the result of the $N_k = 30$ weighing operations in the given evaluation state.

Then, for the evaluation state determined by the conveying speed $v_i$ and the measurement time $t_j(v_i)$, the 30 weighing values are used as an input to derive a performance value, for example the standard deviation of the 30 weighing values or a function thereof (e. g. the variance). Performance data comprising the performance value (for example the standard deviation of the 30 weighing values or a function thereof) and meta data comprising data associated with the evaluation state $E_k$ is stored in a data base. The meta data may comprise, for example, the conveying speed and the measurement time of the evaluation state $E_k$.

The performance data including the meta data may be stored as a multidimensional table. For example, the entry in the table with indices (i, j, k), $X_{ijk}$, may be the performance value for the k-th measurement carried out in the evaluation state with conveying speed $v_i$ and measurement time $t_j(v_i)$.

According to a second aspect of the present invention, there is provided a weighing system, said weighing system including a dynamic weighing instrument comprising conveyor means for conveying an object to be weighed and weighing means for weighing the object while being conveyed by said conveyor means, said weighing instrument being operable in one of a plurality of operating states, each operating state being determined by parameter values of at least one operating state parameter, said weighing instrument being adapted to output a weighing value as a result of a weighing operation in a given operating state, said weighing system further comprising:

- an operating unit, said operating unit being adapted to operate the weighing instrument in one of a plurality of M evaluation states $E_k$, k=1, ..., M, $M \geq 2$ selected from the operating states such that $N_k$ weighing operations are carried out in the respective evaluation state $E_k$ thereby obtaining $N_k$ weighing values as the output of the dynamic weighing instrument,

- data processing means, said data processing means being adapted to receive for each evaluation state $E_k$ the $N_k$ weighing values from the dynamic weighing instrument and to derive a performance value for said evaluation state $E_k$,

- data storage means for storing for each evaluation state $E_k$ performance data comprising the respective performance value and meta data comprising data associated with the evaluation state $E_k$ in a data base, said meta data comprising the parameter values of the at least one operating state parameter which determine the operating state $E_k$.

The weighing system according to the second aspect of the present invention is adapted to carry out the method according to the first aspect of the present invention. Everything that was said above in relation to the weighing method and the weighing instrument also applies to the weighing system.

In an embodiment according to the second aspect of the present invention, said data processing means may comprise electronic data processing means. Said electronic data processing means may comprise a processor. Said electronic data processing means may comprise a personal computer.

In an embodiment of the weighing system according to the second aspect of the present invention, said weighing system may comprise input means for selecting the plurality of evaluation states via a user input. The input means may comprise, for example, a touch screen and/or a keyboard. In an alternative embodiment of the present invention, the evaluation states $E_k$ may be selected in advance and their parameter values may be stored on data storage means for storing the parameter values which may be in communication with the operating unit. Then, it may not be possible to select the plurality of evaluation states by a user input, but the set of evaluation states $E_k$ may be preselected and not changeable via a user input. The data storage means for storing the parameter values may be the same as the data storage means for storing the performance data, or it may be different data storage means.

In one embodiment, the weighing system may further comprise display means for displaying information related to the performance data. For example, the display means may be adapted to display information representing the performance value and the associated meta data for each evaluation state $E_k$. The display means may be in communication with the data processing means. The display means may be a monitor or a touch screen.

According to a third aspect of the present invention, there is provided a computer program for evaluating the performance of a dynamic weighing instrument, said dynamic weighing instrument comprising conveyor means for conveying an object to be weighed and weighing means for weighing the object while being conveyed by said conveyor means, said weighing instrument being operable in one of a plurality of operating states, each operating state being determined by parameter values of at least one operating state parameter, said weighing instrument being adapted to output a weighing value as the result of a weighing operation in a given operating state, the computer program comprising instructions which, when the computer program is carried out on a computer, cause the computer to carry out the following steps:

- executing a performance evaluation routine for a plurality of M evaluation states $E_k$, k=1, ... , M, M $\geq$ 2, selected from the operating states and for a number

$N_k$ of weighing operations to be carried out in the respective evaluation state $E_k$, said routine comprising, for each of the plurality of evaluation states, carrying out the following evaluation routine steps:

    o creating an operating command, said operating command being adapted to operate the weighing instrument in the evaluation state $E_k$ such that $N_k$ weighing operations are carried out in said evaluation state $E_k$ thereby obtaining $N_k$ weighing values as the output of the dynamic weighing instrument,

    o receiving the $N_k$ weighing values from the weighing instrument as an input, and deriving a performance value for the evaluation state $E_k$,

    o storing performance data comprising the performance value and meta data comprising data associated with the evaluation state $E_k$ in a data base, said meta data comprising the parameter values of the at least one operating state parameter which determine the operating state $E_k$.

The computer program according to the third aspect of the present invention is adapted to carry out the method according to the first aspect of the present invention and may be used in combination with the weighing system according to the second aspect of the present invention. Everything that was said above in relation to the weighing system and the method also applies to the computer program.

According to a fourth aspect of the present invention, there is provided a data carrier having stored thereupon the computer program according to the third aspect of the present invention.

**Brief description of drawings**

In the following description, the invention will be specified in greater detail by way of examples, with reference to the drawings. In the drawings,

Fig. 1    is a schematic view of an embodiment of a weighing system according to the present invention,

Fig. 2    is a flowchart of a first embodiment of the method according to the present invention,

Fig. 3    is a flowchart of a second embodiment of the method according to the present invention, wherein the evaluation states are determined by the conveying speed and the measurement time,

Fig. 4    is a first example of a presentation of performance data obtained, for example, with the method according to the second embodiment shown in Fig. 3,

Fig. 5    is a second example of a presentation of performance data obtained, for example, with the method according to the second embodiment shown in Fig. 3.

## Description of embodiments

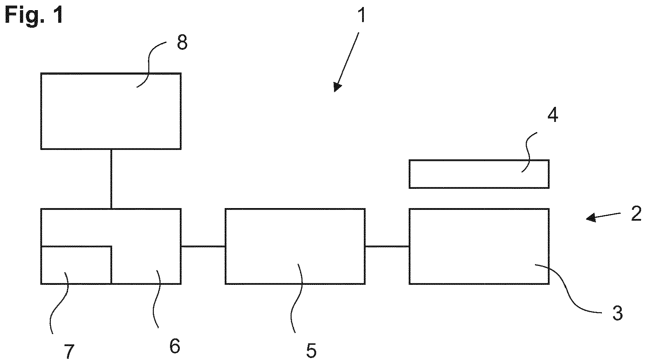

Fig. 1 is a schematic view of an embodiment of a weighing system 1 according to the first aspect of the present invention. The weighing system 1 includes a dynamic weighing instrument 2. The dynamic weighing instrument 2 comprises conveyor means 4 for conveying an object to be weighed and weighing means 3 for weighing the object while being conveyed by said conveyor means. The weighing means 3 may comprise a load cell. The conveyor means 4 may comprise a conveyor belt and a motor for driving said conveyor belt. The conveyor means 4, for example its conveyor belt, may be adapted to convey the object to be weighed over the weighing means 3. Thereby, the weight of the object to be weighed may be determined. The weighing instrument 2 may output a weighing value as the result of a weighing operation. The weighing instrument 2 may be a checkweigher.

The weighing instrument 2 may be operable in one of a plurality of possible operating states. Each operating state is completely determined by parameter values of at least one operating state parameter. For instance, in the example shown in Fig. 1, each operating state may be determined by parameter values of two operating state parameters, a first operating state parameter being the conveying speed of the conveyor means 4 and a second operating state parameter being the measurement time of said weighing means 3. The conveying speed and the measurement time were defined above.

The weighing system 1 may further comprise an operating unit 5. The operating unit 5 may comprise XTRC of Mettler-Toledo. The operating unit 5 may be in communication with the weighing instrument 2. The operating unit 5 may be adapted to operate the weighing instrument 2 in one of a plurality of evaluation states $E_k$ selected from the operating states. For the present example where the operating states are completely determined by parameter values of two operating state parameters, each evaluation state $E_k$ is completely determined by a value of the conveying speed and a value of the measurement time. The operating unit 5 may further be adapted to operate the weighing instrument 2 such that $N_k$ weighing operations in the respective evaluation state $E_k$ are carried out, thereby obtaining $N_k$ weighing values as the output of the dynamic weighing instrument 2.

The operating unit 5 may further be in communication with data processing means 6. The data processing means 6 are adapted to receive for each evaluation state $E_k$ the $N_k$ weighing values from the dynamic weighing instrument 2. In the example shown in Fig. 1, the weighing values obtained from the weighing instrument 2 are first communicated to the operating unit 5 and then communicated to the data processing means 6 via the operating unit 5. However, the weighing instrument 2 may also communicate the weighing values directly to the data processing means 6. The data processing means 6 is adapted to derive a performance value for said evaluation state $E_k$ based on the $N_k$ weighing values. The performance value may, for example, be the standard deviation or a function thereof, e. g. the variance of the $N_k$ weighing values. The data processing means 6 may be or may comprise electronic data processing means. A computer program, e. g., a computer program according to the third aspect of the present invention may be carried out on the electronic data processing means.

The weighing system 1 further comprises data storage means 7 for storing for each evaluation state $E_k$ performance data comprising the respective performance value and meta data comprising data associated with the evaluation state $E_k$ in a data base. The data storage means 7 may be in communication with the data processing means 6 or it may be included in the data processing means 6. The meta data may comprise for at least one evaluation state $E_k$ the value of the conveying speed and the value of the measurement time. The performance data may be stored in a multidimensional matrix. It may be possible to connect an external data carrier, e. g. a USB stick, with the data storage means 7 and to download the performance data to said external data carrier.

The weighing system 1 may further comprise input means (not shown) for selecting the plurality of evaluation states $E_k$ via a user input. The input means may be, for example, a keyboard or a touch screen. Alternatively, information related to the evaluation states, e. g. the respective conveying speeds and measurement times, may be stored on data storage means, e. g. data storage means 7. This information may be communicated to the operating unit 5. The operating unit 5 may then operate the weighing instrument 2 in the evaluation states $E_k$.

The weighing system 1 shown in Fig. 1 may further comprise display means 8 for displaying information related to the performance data. The display means 8 may be in communication with the data processing means 6. However, it is not necessary that the weighing system 1 comprises said display means 8.

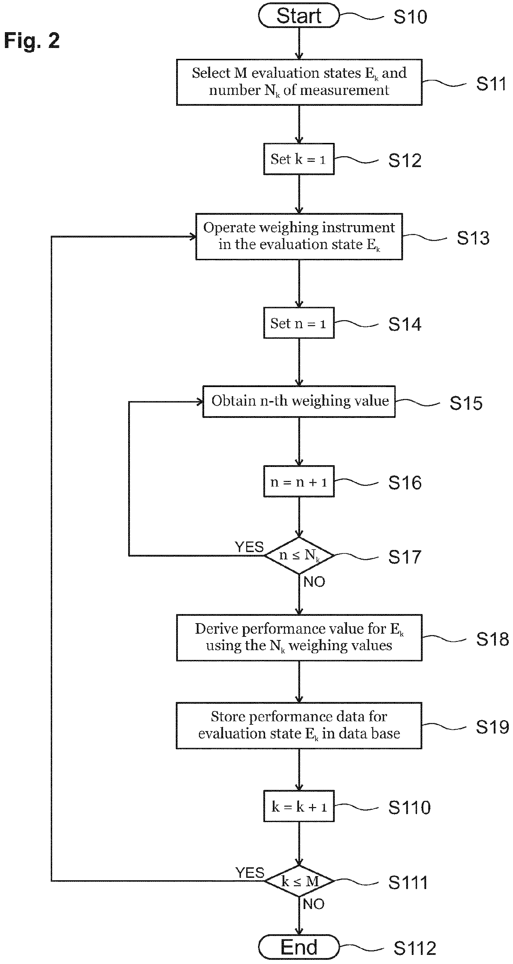

Fig. 2 is a flow chart of a first embodiment of the method according to the present invention. The method may be carried out using the weighing system 1 shown in Fig. 1. The method starts at step S10. In step S11, M $\geq 2$ evaluation states $E_k$ are selected from the set of possible operating states. For example, a user may select the M evaluation states via a user input. Alternatively, the evaluation states may be preselected. E. g., information related to the evaluation states may be saved on a data carrier. Furthermore, a number $N_k$ of weighing operations to be carried out in the respective evaluation state $E_k$ is selected.

At step S12, a counter for the evaluation states, k, is set to 1. Next, at step S13, the weighing instrument is operated in the evaluation state $E_k$. I. e., the weighing instrument is first operated in the evaluation state $E_1$. Next, a counter n for the number $N_k$ of measurements in the evaluation state $E_1$ is set to 1, n = 1. In step S15, the n-th weighing value is obtained by operating the weighing instrument in the evaluation state $E_k$. The weighing operation may be carried out without any weight/object to be weighed or it may be carried out with a given preload/bias weight. Said weighing value is either stored in the dynamic weighing instrument and/or it is transmitted to the data processing means. At step S16, the counter for the number of measurements is increased by 1, n = n+1. If the counter n is less or equal than the number of weighing operations $N_k$, the method returns to step S15 and the next weighing value is obtained. When the counter n is bigger than the number $N_k$ of weighing operations to be carried out in said evaluation state $E_k$, the method proceeds to step S18.

At step S18, a performance value is derived from the $N_k$ weighing values obtained in the evaluation state $E_k$. For example, for the $N_k$ weighing values, the standard deviation may be calculated in step S18.

The method proceeds to step S19, where performance data comprising the performance value and meta data comprising data associated with the evaluation state $E_k$ is stored in a data base. The meta data comprises the parameter value(s) of the operating state parameter(s) defining the evaluation state $E_k$.

Then, at step S110, the counter for the evaluation states, k, is increased by 1. At step 111, it is checked whether the counter k for the evaluation states is less or equal than the number M of evaluation states. If the answer is YES, the method returns to step S13. If the answer is NO, the method terminates at step S112.

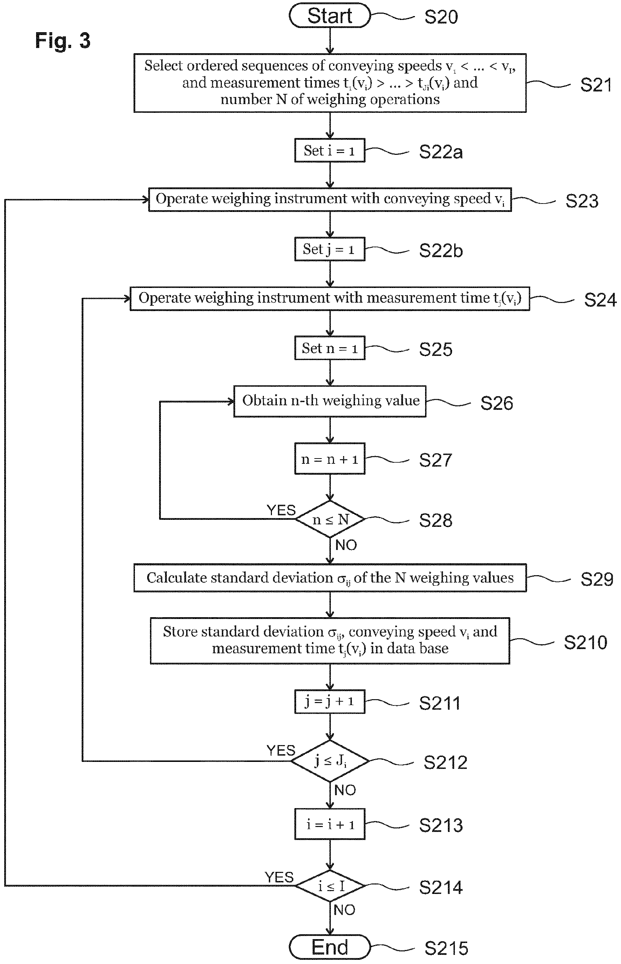

The flow chart shown in Fig. 2 depicts a rather general embodiment of the method according to the second aspect of the present invention. A more concrete example is shown in Fig 3. Fig. 3 is a flow chart of a second embodiment of the method according to the second aspect of the present invention, wherein the evaluation states are determined by values of the conveying speed $v_i$ and values of the measurement time $t_j$.

The method starts at S20. At step S21, the evaluation states $E_k$ are selected. To this end, an ordered sequence of conveying speeds $v_1 < ... < v$, from a range between a minimum conveying speed and a maximum conveying speed is selected. In the example, the sequence is strictly monotonically increasing. Further, for each conveying speed $v_i$, an ordered sequence of measurement times $t_1(v_i) > ... > t_{Ji}(v_i)$ is selected from a range between a minimum measurement time to a maximum measurement time. In the example, a strictly monotonically decreasing sequence of measurement times is selected. The number of measurement times in each sequence may be different for the different conveying speeds, or it may be the same. The ordered sequences of measurement times may be different for the different conveying speeds, or they may be the same. Furthermore, a number $N_k \geq 2$ of weighing operations is selected for each evaluation state $E_k$.

In one concrete example, the following sequences of conveying speeds and measurement times may be chosen: The conveyor means may have a maximum conveying speed $v_{max}$. This maximum speed may be, for example, 120 m/min. Then, the selected sequence of conveying speeds may be $0.2 \, v_{max} < 0.4 \, v_{max} < 0.6 \, v_{max} < 0.8 \, v_{max} < 1.0 \, v_{max}$. The measurement times in the sequence may be, for example, chosen as a function of the respective conveying speed and effective belt length values corresponding to different values of the length of a conveying path of an object to be weighed. E. g., when half of the belt length is 150 mm, one may define effective belt length values $l_j/2$ as 30 mm, 50 mm, 70 mm, 90 mm, 110 mm, 130 mm, 150 mm. Then, one may define, for each conveying speed $v_i$, measurement times $t_j(v_i) = \dfrac{l_j}{2v_i}$, as long as $t_j(v_i)$ is larger than a cutoff time and define a strictly monotonically decreasing sequence of those measurement times for each conveying speed of the selected sequence of conveying speeds. However, the invention is not limited to the above selection of conveying speed values and measurement time values, and other conveying speed values and measurement time values may be chosen. Furthermore, in the embodiment shown in Fig. 3, the number $N_k$ of weighing operations may be the same for each evaluation state $E_k$, for example, $N_k = 30$ for each evaluation state $E_k$.

In step S22a, the counter i for the conveying speed is set to 1, i = 1.

In step S23, the weighing instrument is operated with the conveying speed $v_i$. The counter j for the measurement time is set to j = 1, in step S22b. The weighing instrument is operated with the measurement time $t_j(v_i)$ in step S24.

In step S25, the counter n for the number $N_k$ of weighing operations is set to 1, n = 1. Then, the n-th weighing value is obtained in step S26 while the weighing instrument is operated with the conveying speed $v_i$ and the measurement time $t_j(v_i)$. The weighing operation may be carried out without any weight/object to be weighed or it may be carried out with a given preload/bias weight. After the n-th weighing value has been obtained, the counter n is increased by 1 in step S27, and it is checked in step S28 whether the counter n is less or equal than the number $N_k$ of weighing operations. If this is the case, the method returns to step S26, otherwise the method continues to step S29.

In step S29, the standard deviation $\sigma_{ij}$ of the $N_k$ weighing values obtained with the weighing instrument operated with the conveying speed $v_i$ and the measurement time $t_j(v_i)$ is calculated. This calculation may be done, for example, using electronic data processing means. Once the standard deviation $\sigma_{ij}$ has been ob-

tained, it is stored, together with the conveying speed $v_i$ and the measurement time $t_j(v_i)$ in a data base in step S210. This data is the performance data. Performance data may be stored, for example, in the form of a multi-dimensional matrix.

The method proceeds to step S211, where the counter j for the measurement time is increased by 1. Then it is checked in step S212 whether said counter j is less than the maximum number of measurement times $J_i$ in the sequence for said conveying speed $v_i$. If the answer is YES, the method returns to step S24, and the method is repeated with the old conveying speed $v_i$ and the new measurement time $t_{j+1}(v_i)$. If the answer is NO, the method proceeds to step S213 where the counter for the conveying speed i is increased by 1. It is then checked in step S214 whether said counter i is less or equal than the maximum counter I for the conveying speed. If the answer is YES, the method returns to step S23. If the answer is NO, the method terminates at step 215. I. e., with the above method the conveying speed is iterated through the selected sequence of conveying speeds in an outer iteration loop, and for each iteration step of said outer loop the measurement time is iterated through said selected sequence of measurement times in an inner iteration loop.

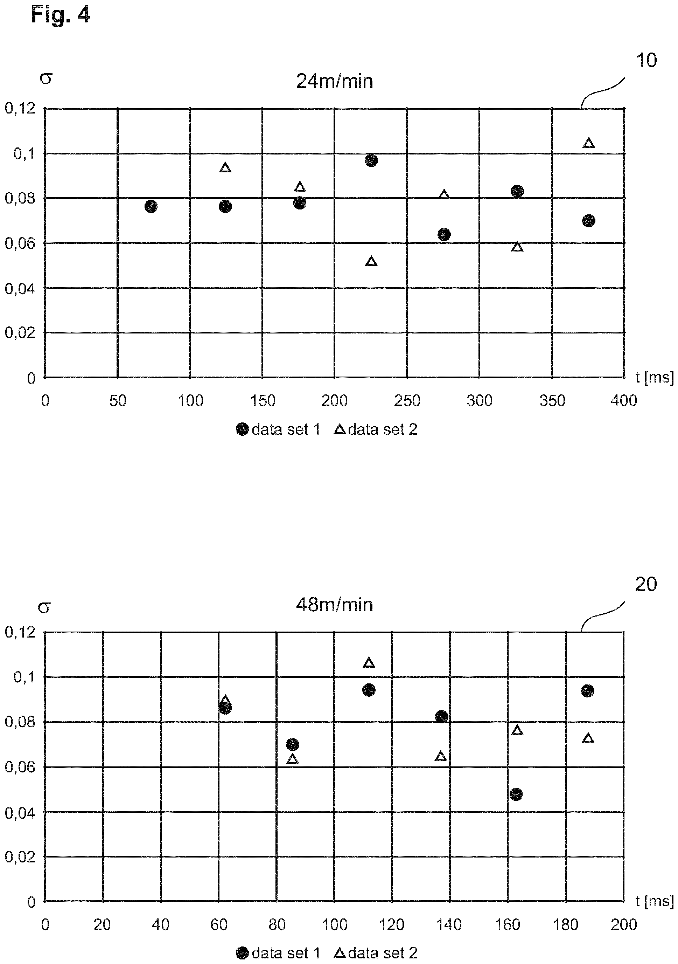

Fig. 4 is a first example of a presentation of performance data obtained, for example, with the method according to the second embodiment as shown in Fig. 3. Fig. 4 depicts in its upper half a first diagram 10 and in its lower half a second diagram 20. The first diagram 10 is a graph wherein the measurement time t is shown on the X axis and the standard deviation $\sigma$ is shown on the Y axis. The data is represented for a conveying speed of 24 m/min. First and second data sets (data set 1, data set 2) taken at a first time $t_1$ and a second time $t_2$, respectively, are shown. For example, the performance data taken at time $t_1$ may be taken at the site of a manufacturer, and the data taken at the second time $t_2$ may be taken at the site of a customer. The first diagram 10 illustrates that there is a change in the standard deviation with time. This may indicate to a service technician that the weighing instrument was not correctly assembled at the customer's site. Alternatively, the measurement data may have been taken, e. g., both at the customer's site, at a time $t_1$ and at a later time $t_2$. Then, it becomes clear that the performance of the weighing instrument has changed over time. The magnitude of the change depends on the measurement time. For example, there is only a very small change for t = 185 ms, while there is a very large change for t = 225 ms. This information may help a service technician to narrow down possible problems of the weighing instrument. Additionally or alternatively, the user may decide to operate the weighing instrument only with a measurement time of t = 185 ms.

In the second diagram 20 shown in the lower half of Fig. 4, performance data for a second conveying speed, namely 48 m/min, is depicted. Similarly to the data shown in Fig. 4, it may be possible to derive information regarding the change of the performance of the weighing instrument.

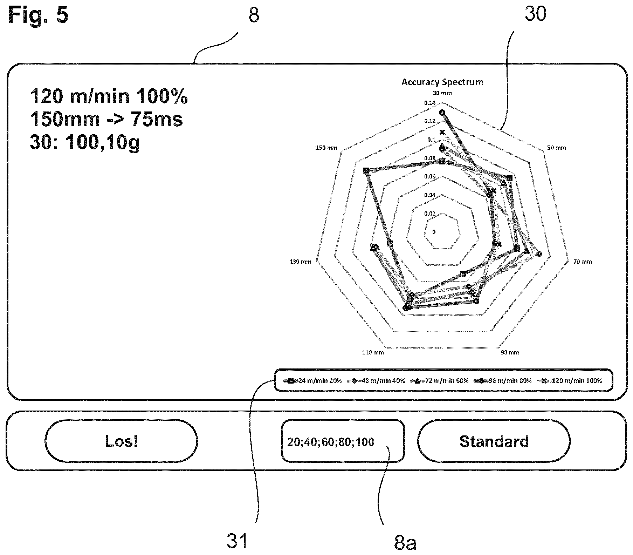

Fig. 5 is a second example of a presentation of performance data obtained, for example, with the method according to the second embodiment of the method shown in Fig. 3. The data may be presented, for example, on a display means 8 of the weighing system 1 shown in Fig. 1. In the upper left corner, it is indicated that the maximum speed of the conveyor means is 120 m/min. Half of the length of the belt conveyor is 150 mm, corresponding to a minimal measurement time for the maximum conveying speed of 75 msec. The measurement times for the conveying speed values are given via values of an effective belt length $l_j/2$ as shown at 30, namely $l_j/2$ = 30 mm, 50 mm, 70 mm, 90 mm, 110 mm, 130 mm, 150 mm via $t_j(v_i) = \dfrac{l_j}{2v_i}$. For each evaluation state, $N_k$ = 30 measurements are taken, and a bias weight of 100,10 g is used.

In the embodiment shown in Fig. 5, the various conveying speed values used for the evaluation states are also depicted in a box 31. The following speed values of the conveying speed were used: 24 m/min, 48 m/min, 72 m/min, 96 m/min and 120 m/min, corresponding to $0.2\,v_{max}$, $0.4\,v_{max}$, $0.6\,v_{max}$, $0.8\,v_{max}$ and $1.0\,v_{max}$. These values of the conveying speed might be selectable by inputting them via a user input as it is displayed at 8a.

The result of the performance evaluation routine is depicted in an accuracy spectrum 30. For each conveying speed and each measurement time expressed in terms of a length via $t_j(v_i) = \dfrac{l_j}{2v_i}$, the standard deviation is depicted. In this way, a service technician obtains quickly information regarding the performance of the weighing instrument for all evaluation states.

**Claims**

1.  Method for evaluating the performance of a dynamic weighing instrument (2), said dynamic weighing instrument (2) comprising conveyor means (4) for conveying an object to be weighed and weighing means (3) for weighing the object while being conveyed by said conveyor means (4), said weighing instrument (2) being operable in one of a plurality of operating states, each operating state being determined by parameter values of at least one operating state parameter, said weighing instrument (2) being adapted to output a weighing value as the result of a weighing operation in a given operating state, **characterized in that** the method comprises the following steps:

    - selecting a plurality of M evaluation states $E_k$, k=1, ..., M, M $\geq$ 2, from the set of operating states and a number $N_k$ of weighing operations to be carried out in the respective evaluation state $E_k$,
- executing a performance evaluation routine, wherein said routine comprises, for each of the plurality of evaluation states $E_k$, k=1, ..., M, carrying out the following evaluation routine steps:

> o operating the weighing instrument (2) in the evaluation state $E_k$ determined by the corresponding parameter values of the at least one operating state parameter,
> o carrying out $N_k$ weighing operations in said evaluation state $E_k$ thereby obtaining $N_k$ weighing values as the output of the dynamic weighing instrument (2),
> o using the $N_k$ weighing values as an input to derive a performance value for the evaluation state $E_k$,
> o storing performance data comprising the performance value and meta data comprising data associated with the evaluation state $E_k$ in a data base, said meta data comprising the parameter values of the at least one operating state parameter which determine the operating state $E_k$.

2. Method according to claim 1, wherein said method is carried out by using electronic data processing means (6).

3. Method according to claim 1 or 2, wherein a first operating state parameter is a conveying speed of the conveyor means (4) and/or a second operating state parameter is a measurement time of the weighing means (3).

4. Method according to claim 3, wherein each operating state is determined by parameter values of the first and second operating state parameters, and wherein

> selecting the plurality of evaluation states $E_k$ comprises selecting an ordered sequence of conveying speeds from the range between a minimum conveying speed to a maximum conveying speed, and for each of the conveying speeds in the sequence selecting an ordered sequence of measurement times from the range between a minimum measurement time to a maximum measurement time, and wherein executing the performance evaluation routine comprises iterating one of the conveying speed or the measurement time through said selected sequence of conveying speeds or measurement times in an outer iteration loop and for each iteration step of said outer loop iterating the other one of the conveying speed or the measurement time through said selected sequence of conveying speeds or measurement times in an inner loop and carrying out the evaluation routine steps for the evaluation state determined by the iterated values of conveying speed and measurement time.

5. Method according to one of the claims 1 to 4, wherein selecting said plurality of evaluation states comprises selecting evaluation states determined by standardized parameter values.

6. Method according to one of the claims 1 to 5, wherein for at least one of the evaluation states $E_k$ deriving the performance value comprises calculating the standard deviation of the $N_k$ weighing values obtained in said evaluation state $E_k$.

7. Method according to one of the claims 1 to 6, wherein the method further comprises comparing the performance data with benchmark data reflecting performance requirements for said weighing instrument (2).

8. Method according to one of the claims 1 to 7, wherein the method comprises executing the performance evaluation routine at a first time $t_1$ and storing meta data related to the first time $t_1$ together with the performance data derived at the first time $t_1$ in the data base, and wherein the method further comprises executing the performance evaluation routine again at a later, second time $t_2$ and storing meta data related to the second time $t_2$ together with the performance data derived at the second time $t_2$ in the data base.

9. Method according to claim 8, wherein the method further comprises comparing the performance data stored during the performance evaluation routine executed at the first time $t_1$ and the performance data stored during the performance evaluation routine executed at the second time $t_2$.

10. A weighing system (1), said weighing system (1) including a dynamic weighing instrument (2) comprising conveyor means (4) for conveying an object to be weighed and weighing means (3) for weighing the object while being conveyed by said conveyor means (4), said weighing instrument (2) being operable in one of a plurality of operating states, each operating state being determined by parameter values of at least one operating state parameter, said weighing instrument (2) being adapted to output a weighing value as a result of a weighing operation in a given operating state, said weighing system (1) further comprising:

> - an operating unit (5), said operating unit (5) being adapted to operate the weighing instrument (2) in one of a plurality of M evaluation states $E_k$, k = 1, ..., M, M $\geq$ 2, selected from the operating states such that $N_k$ weighing operations are carried out in the respective evaluation state $E_k$ thereby obtaining $N_k$ weighing values as the output of the dynamic weighing instrument (2),

- data processing means (6), said data processing means (6) being adapted to receive for each evaluation state $E_k$ the $N_k$ weighing values from the dynamic weighing instrument (2) and to derive a performance value for said evaluation state $E_k$,

- data storage means (7) for storing for each evaluation state $E_k$ performance data comprising the respective performance value and meta data comprising data associated with the evaluation state $E_k$ in a data base, said meta data comprising the parameter values of the at least one operating state parameter which determine the operating state $E_k$.

11. Weighing system (1) according to claim 10, wherein said data processing means (6) comprises electronic data processing means.

12. Weighing system (1) according to claim 10 or 11, wherein said weighing system (1) comprises input means for selecting the plurality of evaluation states via a user input.

13. Weighing system (1) according to one of the claims 10 to 12, further comprising display means (8) for displaying information related to the performance data.

14. Computer program for evaluating the performance of a dynamic weighing instrument (2), said dynamic weighing instrument (2) comprising conveyor means (4) for conveying an object to be weighed and weighing means (3) for weighing the object while being conveyed by said conveyor means (4), said weighing instrument (2) being operable in one of a plurality of operating states, each operating state being determined by parameter values of at least one operating state parameter, said weighing instrument (2) being adapted to output a weighing value as the result of a weighing operation in a given operating state, the computer program comprising instructions which, when the computer program is carried out on a computer, cause the computer to carry out the following steps:

- executing a performance evaluation routine for a plurality of M evaluation states $E_k$, k = 1, ..., M, M $\geq$ 2, selected from the operating states and for a number $N_k$ of weighing operations to be carried out in the respective evaluation state $E_k$, said routine comprising, for each of the plurality of evaluation states, carrying out the following evaluation routine steps:

o creating an operating command, said operating command being adapted to operate the weighing instrument (2) in the evaluation state $E_k$ such that $N_k$ weighing operations are carried out in said evaluation state $E_k$ thereby obtaining $N_k$ weighing values as the output of the dynamic weighing instrument (2),

o receiving the $N_k$ weighing values from the weighing instrument (2) as an input, and deriving a performance value for the evaluation state $E_k$,

o storing performance data comprising the performance value and meta data comprising data associated with the evaluation state $E_k$ in a data base, said meta data comprising the parameter values of the at least one operating state parameter which determine the operating state $E_k$.

15. Data carrier having stored thereupon the computer program according to claim 14.

**Patentansprüche**

1. Verfahren zum Bewerten der Leistung eines dynamischen Wägeinstruments (2), wobei das dynamische Wägeinstrument (2) eine Fördereinrichtung (4) zum Fördern eines zu wägenden Objekts und eine Wägeeinrichtung (3) zum Wägen des Objekts während des Förderns durch die Fördereinrichtung (4) umfasst, wobei das Wägeinstrument (2) in einem von einer Vielzahl von Betriebszuständen betreibbar ist, wobei jeder Betriebszustand durch Parameterwerte mindestens eines Betriebszustandsparameters bestimmt ist, wobei das Wägeinstrument (2) dazu ausgelegt ist, einen Wägewert als Ergebnis eines Wägevorgangs in einem gegebenen Betriebszustand auszugeben, **dadurch gekennzeichnet, dass** das Verfahren die folgenden Schritte umfasst:

- Auswählen einer Vielzahl von M Bewertungszuständen $E_k$, k=1, ..., M, M $\geq$ 2, aus dem Satz von Betriebszuständen und einer Anzahl $N_k$ von in dem jeweiligen Bewertungszustand $E_k$ durchzuführenden Wägevorgängen,

- Ausführen einer Leistungsbewertungsroutine, wobei die Routine für jeden der Vielzahl von Bewertungszuständen $E_k$, k=1, ..., M Durchführen der folgenden Schritte der Bewertungsroutine umfasst:

o Betreiben des Wägeinstruments (2) in dem durch die entsprechenden Parameterwerte des mindestens einen Betriebszu-

standsparameters bestimmten Bewertungszustand $E_k$,

o Durchführen von $N_k$ Wägevorgängen in dem Bewertungszustand $E_k$, wodurch $N_k$ Wägewerte als Ausgabe des dynamischen Wägeinstruments (2) erlangt werden,

o Verwenden der $N_k$ Wägewerte als Eingabe zum Ableiten eines Leistungswertes für den Bewertungszustand $E_k$,

o Speichern von Leistungsdaten, die den Leistungswert umfassen, und von Metadaten, die dem Bewertungszustand $E_k$ zugeordnete Daten umfassen, in einer Datenbank, wobei die Metadaten die Parameterwerte des mindestens einen Betriebszustandsparameters umfassen, die den Betriebszustand $E_k$ bestimmen.

2. Verfahren nach Anspruch 1, wobei das Verfahren unter Verwendung einer elektronischen Datenverarbeitungseinrichtung (6) durchgeführt wird.

3. Verfahren nach Anspruch 1 oder 2, wobei ein erster Betriebszustandsparameter eine Fördergeschwindigkeit der Fördereinrichtung (4) ist und/oder ein zweiter Betriebszustandsparameter eine Messzeit der Wägeeinrichtung (3) ist.

4. Verfahren nach Anspruch 3, wobei jeder Betriebszustand durch Parameterwerte des ersten und zweiten Betriebszustandsparameters bestimmt ist und wobei

das Auswählen der Vielzahl von Bewertungszuständen $E_k$ Auswählen einer geordneten Abfolge von Fördergeschwindigkeiten aus dem Bereich zwischen einer minimalen Fördergeschwindigkeit und einer maximalen Fördergeschwindigkeit und für jede der Fördergeschwindigkeiten in der Abfolge Auswählen einer geordneten Abfolge von Messzeiten aus dem Bereich zwischen einer minimalen Messzeit und einer maximalen Messzeit umfasst, und wobei das Durchführen der Leistungsbewertungsroutine umfasst, dass eine von der Fördergeschwindigkeit oder der Messzeit die ausgewählte Abfolge von Fördergeschwindigkeiten oder Messzeiten in einer äußeren Wiederholungsschleife durchläuft und dass für jeden Wiederholungsschritt der äußeren Schleife die andere von der Fördergeschwindigkeit oder der Messzeit die ausgewählte Abfolge von Fördergeschwindigkeiten oder Messzeiten in einer inneren Schleife durchläuft und dass das Durchführen der Schritte der Bewertungsroutine für den Bewertungszustand durch die wiederholten Werte der Fördergeschwindigkeit und der Messzeit bestimmt wird.

5. Verfahren nach einem der Ansprüche 1 bis 4, wobei das Auswählen der Vielzahl von Bewertungszuständen Auswählen von Bewertungszuständen umfasst, die durch standardisierte Parameterwerte bestimmt sind.

6. Verfahren nach einem der Ansprüche 1 bis 5, wobei für mindestens einen der Bewertungszustände $E_k$ das Ableiten des Leistungswerts Berechnen der Standardabweichung der in dem Bewertungszustand $E_k$ erlangten $N_k$ Wägewerte umfasst.

7. Verfahren nach einem der Ansprüche 1 bis 6, wobei das Verfahren ferner Vergleichen der Leistungsdaten mit Eckdaten umfasst, die die Leistungsanforderungen für das Wägeinstrument (2) widerspiegeln.

8. Verfahren nach einem der Ansprüche 1 bis 7, wobei das Verfahren Ausführen der Leistungsbewertungsroutine zu einem ersten Zeitpunkt $t_1$ und Speichern von den ersten Zeitpunkt $t_1$ betreffende Metadaten zusammen mit den zum ersten Zeitpunkt $t_1$ abgeleiteten Leistungsdaten in der Datenbank umfasst, und wobei das Verfahren ferner erneutes Ausführen der Leistungsbewertungsroutine zu einem späteren zweiten Zeitpunkt $t_2$ und Speichern von den zweiten Zeitpunkt $t_2$ betreffende Metadaten zusammen mit den zum zweiten Zeitpunkt $t_2$ abgeleiteten Leistungsdaten in der Datenbank umfasst.

9. Verfahren nach Anspruch 8, wobei das Verfahren ferner Vergleichen der während der zum ersten Zeitpunkt $t_1$ ausgeführten Leistungsbewertungsroutine gespeicherten Leistungsdaten und der während der zum zweiten Zeitpunkt $t_2$ ausgeführten Leistungsbewertungsroutine gespeicherten Leistungsdaten umfasst.

10. Wägesystem (1), wobei das Wägesystem (1) ein dynamisches Wägeinstrument (2) beinhaltet, das eine Fördereinrichtung (4) zum Fördern eines zu wägenden Objekts und eine Wägeeinrichtung (3) zum Wägen des Objekts während des Förderns durch die Fördereinrichtung (4) umfasst, wobei das Wägeinstrument (2) in einem von einer Vielzahl von Betriebszuständen betreibbar ist, wobei jeder Betriebszustand durch Parameterwerte mindestens eines Betriebszustandsparameters bestimmt ist, wobei das Wägeinstrument (2) dazu ausgelegt ist, einen Wägewert als Ergebnis eines Wägevorgangs in einem gegebenen Betriebszustand auszugeben, wobei das Wägesystem (1) ferner Folgendes umfasst:

- eine Betriebseinheit (5), wobei die Betriebseinheit (5) dazu ausgelegt ist, das Wägeinstrument (2) in einem von einer Vielzahl von M Bewertungszuständen $E_k$, k = 1,..., M, M $\geq$ 2 zu betreiben, die aus den Betriebszuständen ausgewählt

sind, sodass $N_k$ Wägevorgänge in dem jeweiligen Bewertungszustand $E_k$ durchgeführt werden, wodurch $N_k$ Wägewerte als Ausgabe des dynamischen Wägeinstruments (2) erlangt werden,

- eine Datenverarbeitungseinrichtung (6), wobei die Datenverarbeitungseinrichtung (6) dazu ausgelegt sind, für jeden Bewertungszustand $E_k$ die $N_k$ Wägewerte von dem dynamischen Wägeinstrument (2) zu empfangen und einen Leistungswert für den Bewertungszustand $E_k$ abzuleiten,

- eine Datenspeichereinrichtung (7) zum Speichern von Leistungsdaten für jeden Bewertungszustand $E_k$, die den jeweiligen Leistungswert umfassen, und von Metadaten, die dem Bewertungszustand $E_k$ zugeordnete Daten umfassen, in einer Datenbank, wobei die Metadaten die Parameterwerte des mindestens einen Betriebszustandsparameters umfassen, die den Betriebszustand $E_k$ bestimmen.

11. Wägesystem (1) nach Anspruch 10, wobei die Datenverarbeitungseinrichtung (6) eine elektronische Datenverarbeitungseinrichtung umfasst.

12. Wägesystem (1) nach Anspruch 10 oder 11, wobei das Wägesystem (1) eine Eingabeeinrichtung zum Auswählen der Vielzahl von Bewertungszuständen über eine Benutzereingabe umfasst.

13. Wägesystem (1) nach einem der Ansprüche 10 bis 12, ferner umfassend eine Anzeigeeinrichtung (8) zum Anzeigen von Informationen betreffend die Leistungsdaten.

14. Computerprogramm zum Bewerten der Leistung eines dynamischen Wägeinstruments (2), wobei das dynamische Wägeinstrument (2) eine Fördereinrichtung (4) zum Fördern eines zu wägenden Objekts und eine Wägeeinrichtung (3) zum Wägen des Objekts während des Förderns durch die Fördereinrichtung (4) umfasst, wobei das Wägeinstrument (2) in einem von einer Vielzahl von Betriebszuständen betreibbar ist, wobei jeder Betriebszustand durch Parameterwerte mindestens eines Betriebszustandsparameters bestimmt sind, wobei das Wägeinstrument (2) dazu ausgelegt ist, einen Wägewert als Ergebnis eines Wägevorgangs in einem gegebenen Betriebszustand auszugeben, wobei das Computerprogramm Anweisungen umfasst, die, wenn das Computerprogramm auf einem Computer durchgeführt wird, den Computer dazu veranlassen, die folgenden Schritte durchzuführen:

- Ausführen einer Leistungsbewertungsroutine für eine Vielzahl von M Bewertungszuständen $E_k$, k = 1, ..., M, M $\geq$ 2, ausgewählt aus den Betriebszuständen, und für eine Anzahl $N_k$ von in dem jeweiligen Bewertungszustand $E_k$ durchzuführenden Wägevorgängen, wobei die Routine für jeden der Vielzahl von Bewertungszuständen Durchführen der folgenden Schritte der Bewertungsroutine umfasst:

○ Erstellen eines Betriebsbefehls, wobei der Betriebsbefehl dazu ausgelegt ist, das Wägeinstrument (2) in dem Bewertungszustand $E_k$ derart zu betreiben, dass $N_k$ Wägevorgänge in dem Bewertungszustand $E_k$ durchgeführt werden, wodurch $N_k$ Wägewerte als Ausgabe des dynamischen Wägeinstruments (2) erlangt werden,

○ Empfangen der $N_k$ Wägewerte von dem Wägeinstrument (2) als Eingabe und Ableiten eines Leistungswertes für den Bewertungszustand $E_k$,

○ Speichern von Leistungsdaten, die den Leistungswert umfassen, und von Metadaten, die dem Bewertungszustand $E_k$ zugeordnete Daten umfassen, in einer Datenbank, wobei die Metadaten die Parameterwerte des mindestens einen Betriebszustandsparameters umfassen, die den Betriebszustand $E_k$ bestimmen.

15. Datenträger, auf dem das Computerprogramm nach Anspruch 14 gespeichert ist.

**Revendications**

1. Procédé d'évaluation de la performance d'un instrument de pesée dynamique (2), ledit instrument de pesée dynamique (2) comprenant un moyen de transport (4) pour transporter un objet à peser et un moyen de pesée (3) pour peser l'objet pendant qu'il est transporté par ledit moyen de transport (4), ledit instrument de pesée (2) pouvant fonctionner dans l'un d'une pluralité d'états de fonctionnement, chaque état de fonctionnement étant déterminé par des valeurs de paramètre d'au moins un paramètre d'état de fonctionnement, ledit instrument de pesée (2) étant conçu pour délivrer une valeur de pesée résultant d'une opération de pesée dans un état de fonctionnement donné, **caractérisé en ce que** le procédé comprend les étapes suivantes :

- la sélection d'une pluralité de M états d'évaluation $E_k$, k=1, ..., M, M $\geq$ 2, parmi l'ensemble d'états de fonctionnement et un nombre $N_k$ d'opérations de pesée à effectuer dans l'état d'évaluation respectif $E_k$,

- l'exécution d'une routine d'évaluation de performance, dans lequel ladite routine comprend, pour chacun de la pluralité d'états d'évaluation

$E_k$, k=1, ..., M, la réalisation des étapes de routine d'évaluation suivantes :

    o le fonctionnement de l'instrument de pesée (2) dans l'état d'évaluation $E_k$ déterminé par les valeurs de paramètre correspondantes de l'au moins un paramètre d'état de fonctionnement,

    o la réalisation de $N_k$ opérations de pesée dans ledit état d'évaluation $E_k$, obtenant ainsi $N_k$ valeurs de pesée en tant que sortie de l'instrument de pesée dynamique (2),

    o l'utilisation des $N_k$ valeurs de pesée en tant qu'entrée pour dériver une valeur de performance pour l'état d'évaluation $E_k$,

    o le stockage de données de performance comprenant la valeur de performance et de métadonnées comprenant des données associées à l'état d'évaluation $E_k$ dans une base de données, lesdites métadonnées comprenant les valeurs de paramètre de l'au moins un paramètre d'état de fonctionnement qui déterminent l'état de fonctionnement $E_k$.

**2.** Procédé selon la revendication 1, dans lequel ledit procédé est réalisé à l'aide du moyen de traitement de données électronique (6).

**3.** Procédé selon la revendication 1 ou 2, dans lequel un premier paramètre d'état de fonctionnement est une vitesse de transport du moyen de transport (4) et/ou un second paramètre d'état de fonctionnement est un temps de mesure du moyen de pesée (3).

**4.** Procédé selon la revendication 3, dans lequel chaque état de fonctionnement est déterminé par des valeurs de paramètre des premier et second paramètres d'état de fonctionnement, et dans lequel

    la sélection de la pluralité d'états d'évaluation $E_k$ comprend la sélection d'une séquence ordonnée de vitesses de transport dans la plage comprise entre une vitesse de transport minimale et une vitesse de transport maximale, et pour chacune des vitesses de transport dans la séquence, la sélection d'une séquence ordonnée de temps de mesure dans la plage comprise entre un temps de mesure minimal et un temps de mesure maximal, et dans lequel l'exécution de la routine d'évaluation de performance comprend l'itération de l'un parmi la vitesse de transport ou le temps de mesure à travers ladite séquence sélectionnée de vitesses de transport ou de temps de mesure dans une boucle d'itération externe et, pour chaque étape d'itération de ladite boucle externe, l'itération de l'autre parmi la vitesse de transport ou le temps de mesure à travers ladite séquence sélectionnée de vitesses de transport ou de temps de mesure dans une boucle interne et la réalisation des étapes de routine d'évaluation pour l'état d'évaluation déterminé par les valeurs itérées de vitesse de transport et de temps de mesure.

**5.** Procédé selon l'une des revendications 1 à 4, dans lequel la sélection de ladite pluralité d'états d'évaluation comprend la sélection d'états d'évaluation déterminés par des valeurs de paramètres standardisées.

**6.** Procédé selon l'une des revendications 1 à 5, dans lequel pour au moins l'un des états d'évaluation $E_k$, la dérivation de la valeur de performance comprend le calcul de l'écart type des $N_k$ valeurs de pesée obtenues dans ledit état d'évaluation $E_k$.

**7.** Procédé selon l'une des revendications 1 à 6, dans lequel le procédé comprend en outre la comparaison des données de performance avec des données de référence reflétant des exigences de performance pour ledit instrument de pesée (2).

**8.** Procédé selon l'une des revendications 1 à 7, dans lequel le procédé comprend l'exécution de la routine d'évaluation de performance à un premier temps $t_1$ et le stockage de métadonnées liées au premier temps $t_1$ conjointement avec les données de performance dérivées au premier temps $t_1$ dans la base de données, et dans lequel le procédé comprend en outre l'exécution de la routine d'évaluation de performance à nouveau à un second temps $t_2$ ultérieur et le stockage de métadonnées liées au second temps $t_2$ conjointement avec les données de performance dérivées au second temps $t_2$ dans la base de données.

**9.** Procédé selon la revendication 8, dans lequel le procédé comprend en outre la comparaison des données de performance stockées pendant la routine d'évaluation de performance exécutée au premier temps $t_1$ et des données de performance stockées pendant la routine d'évaluation de performance exécutée au second temps $t_2$.

**10.** Système de pesée (1), ledit système de pesée (1) comportant un instrument de pesée dynamique (2) comprenant un moyen de transport (4) pour transporter un objet à peser et un moyen de pesée (3) pour peser l'objet pendant qu'il est transporté par ledit moyen de transport (4), ledit instrument de pesée (2) pouvant fonctionner dans l'un d'une pluralité d'états de fonctionnement, chaque état de fonctionnement étant déterminé par des valeurs de paramètre d'au moins un paramètre d'état de fonctionnement, ledit instrument de pesée (2) étant conçu pour délivrer une valeur de pesée résultant d'une opération de pesée dans un état de fonctionnement donné, ledit système de pesée (1) comprenant en outre :

- une unité opérationnelle (5), ladite unité opérationnelle (5) étant conçue pour faire fonctionner l'instrument de pesée (2) dans l'un d'une pluralité de M états d'évaluation $E_k$, k = 1, ..., M, M $\geq$ 2, sélectionnés à partir des états de fonctionnement de sorte que $N_k$ opérations de pesée sont réalisées dans l'état d'évaluation respectif $E_k$, obtenant ainsi $N_k$ valeurs de pesée en tant que sortie de l'instrument de pesée dynamique (2),
- un moyens de traitement de données (6), ledit moyen de traitement de données (6) étant conçu pour recevoir pour chaque état d'évaluation $E_k$ les $N_k$ valeurs de pesée de l'instrument de pesée dynamique (2) et pour dériver une valeur de performance pour ledit état d'évaluation $E_k$,
- un moyen de stockage de données (7) pour stocker pour chaque état d'évaluation $E_k$ des données de performance comprenant la valeur de performance respective et des métadonnées comprenant des données associées à l'état d'évaluation $E_k$ dans une base de données, lesdites métadonnées comprenant les valeurs de paramètre de l'au moins un paramètre d'état de fonctionnement qui déterminent l'état de fonctionnement $E_k$.

11. Système de pesée (1) selon la revendication 10, dans lequel ledit moyen de traitement de données (6) comprend un moyen de traitement de données électronique.

12. Système de pesée (1) selon la revendication 10 ou 11, dans lequel ledit système de pesée (1) comprend un moyen d'entrée pour sélectionner la pluralité d'états d'évaluation via une entrée utilisateur.

13. Système de pesée (1) selon l'une des revendications 10 à 12, comprenant en outre un moyen d'affichage (8) pour afficher des informations liées aux données de performance.

14. Programme informatique pour évaluer la performance d'un instrument de pesée dynamique (2), ledit instrument de pesée dynamique (2) comprenant un moyen de transport (4) pour transporter un objet à peser et un moyen de pesée (3) pour peser l'objet pendant qu'il est transporté par ledit moyen de transport (4), ledit instrument de pesée (2) pouvant fonctionner dans l'un d'une pluralité d'états de fonctionnement, chaque état de fonctionnement étant déterminé par des valeurs de paramètre d'au moins un paramètre d'état de fonctionnement, ledit instrument de pesée (2) étant conçu pour délivrer une valeur de pesée résultant d'une opération de pesée dans un état de fonctionnement donné, le programme informatique comprenant des instructions qui, lorsque le programme informatique est exécuté sur un ordinateur, amènent l'ordinateur à réaliser les étapes suivantes :

- l'exécution d'une routine d'évaluation de performance pour une pluralité de M états d'évaluation $E_k$, k = 1, ..., M, M $\geq$ 2, choisis parmi les états de fonctionnement et pour un nombre $N_k$ d'opérations de pesée à réaliser dans l'état d'évaluation respectif $E_k$, ladite routine comprenant, pour chacun de la pluralité d'états d'évaluation, la réalisation des étapes de routine d'évaluation suivantes :

o la création d'une commande de fonctionnement, ladite commande de fonctionnement étant conçue pour faire fonctionner l'instrument de pesée (2) dans l'état d'évaluation $E_k$ de sorte que $N_k$ opérations de pesée sont réalisées dans ledit état d'évaluation $E_k$, obtenant ainsi $N_k$ valeurs de pesée en tant que sortie de l'instrument de pesée dynamique (2),
o la réception des $N_k$ valeurs de pesée de l'instrument de pesée (2) en tant qu'entrée, et la dérivation d'une valeur de performance pour l'état d'évaluation $E_k$,
o le stockage de données de performance comprenant la valeur de performance et de métadonnées comprenant des données associées à l'état d'évaluation $E_k$ dans une base de données, lesdites métadonnées comprenant les valeurs de paramètre de l'au moins un paramètre d'état de fonctionnement qui déterminent l'état de fonctionnement $E_k$.

15. Support de données sur lequel est stocké le programme informatique selon la revendication 14.

**Fig. 1**

**Fig. 2**

Start — S10

Select M evaluation states $E_k$ and number $N_k$ of measurement — S11

Set k = 1 — S12

Operate weighing instrument in the evaluation state $E_k$ — S13

Set n = 1 — S14

Obtain n-th weighing value — S15

n = n + 1 — S16

$n \leq N_k$ — S17
YES / NO

Derive performance value for $E_k$ using the $N_k$ weighing values — S18

Store performance data for evaluation state $E_k$ in data base — S19

k = k + 1 — S110

$k \leq M$ — S111
YES / NO

End — S112

**Fig. 3**

Start — S20

Select ordered sequences of conveying speeds $v_1 < ... < v_I$, and measurement times $t_1(v_i) > ... > t_{Ji}(v_i)$ and number N of weighing operations — S21

Set i = 1 — S22a

Operate weighing instrument with conveying speed $v_i$ — S23

Set j = 1 — S22b

Operate weighing instrument with measurement time $t_j(v_i)$ — S24

Set n = 1 — S25

Obtain n-th weighing value — S26

n = n + 1 — S27

$n \leq N$ — S28 — YES / NO

Calculate standard deviation $\sigma_{ij}$ of the N weighing values — S29

Store standard deviation $\sigma_{ij}$, conveying speed $v_i$ and measurement time $t_j(v_i)$ in data base — S210

j = j + 1 — S211

$j \leq J_i$ — S212 — YES / NO

i = i + 1 — S213

$i \leq I$ — S214 — YES / NO

End — S215

## Fig. 4

# Fig. 5

8

30

**120 m/min 100%
150mm -> 75ms
30: 100,10g**

Accuracy Spectrum

30 mm
0.14
0.12
0.1
0.08
0.06
0.04
0.02
0

150 mm

50 mm

130 mm

70 mm

110 mm

90 mm

24 m/min 20%  48 m/min 40%  72 m/min 60%  96 m/min 80%  120 m/min 100%

Los!   20;40;60;80;100   Standard

31

8a

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107358299 A
- WO 2014165382 A1
- US 9659254 B2
- WO 2015179778 A1
- CN 110298455 A
- US 2012285218 A1
- US 2019391001 A1